# FASCICULE DE BREVET EUROPEEN

(11) **EP 3 103 685 B1**
(45) Date de publication et mention de la délivrance du brevet: **24.04.2019**
(21) Numéro de dépôt: 16172967.8
(22) Date de dépôt: 03.06.2016
(51) Int. Cl.: B60R 13/04, B62D 25/08

(54) **PIECE DE FINITION POUR CAROSSERIE DE VEHICULE ET PROCEDE D'ASSEMBLAGE D'UNE TELLE PIECE**
ABSCHLUSSTEIL FÜR FAHRZEUGKAROSSERIE, UND MONTAGEVERFAHREN EINES SOLCHEN TEILS
INTERIOR FITTING FOR VEHICLE BODY AND METHOD FOR ASSEMBLING SUCH A PART

(30) Priorité: 09.06.2015 FR 1555242
(43) Date de publication de la demande: 14.12.2016
(73) Titulaire: Renault S.A.S., 92100 Boulogne-Billancourt (FR)
(72) Inventeur: TARENBERQUE, ERIC, 91570 Bievres (FR)

(56) Documents cités:
- FR-A1- 2 926 342
- JP-A- 2012 232 614
- US-A1- 2012 175 913
- US-A1- 2012 200 118

## Description

L'invention a pour objet les pièces de finition pour caisse, notamment pour caisse automobile. De telles pièces de finition permettent par exemple de combler des espaces entre deux portions de tôles constitutives de la caisse, notamment dans les zones d'angle entre deux portions sensiblement planes de la caisse. Des pièces de finition peuvent également être montées pour masquer un orifice ménagé au travers d'une portion plane de tôle, par exemple pour permettre d'accéder à certains organes du véhicule lors de l'entretien de celui-ci. Les pièces de finitions peuvent être typiquement assemblées sur des portions de tôle métalliques ou des portions de tôle de matériaux composites, à l'aide de pièces tierces formant éléments de clipsage. Ces éléments de clipsage rapportés entre la pièce de finition et la tôle, comportent par exemple deux potions mâles pointant dans des directions opposées, et venant s'insérer l'une dans un orifice de la tôle, et l'autre dans un orifice ou un creux ménagé sur la pièce de finition.

Les pièces de finitions doivent pouvoir être assemblées de manière simple, et être fixées de manière suffisamment ferme contre les portions de tôle qui la soutiennent, pour limiter des phénomènes de bruyance liées aux phénomènes de vibration de la pièce de finition contre la tôle.

Le document US2012200118 décrit une pièce d'habillage pour véhicule automobile qui est insérée le long d'un bord de tôle, par trois pattes, alignées pour permettre une ajustement de type mouvement de glissière parallèlement au bord de tôle. La pièce est ensuite basculée autour de l'axe du bord de tôle pour venir en appui sur des portions de cornières dépassant du bord de tôle afin de soutenir les efforts exercés sur la tôle. Cette configuration impose une géométrie compliquée de découpe et de pliage en bord de tôle. Le positionnement de la pièce impose en outre à chaque montage de pièce, une recherche de la juste position lors du coulissement le long du bord de tôle.

L'invention a pour but de remédier à ces inconvénients en proposant une pièce de finition plus simple à assembler.

L'invention a pour but de proposer un ensemble comprenant une caisse d'un véhicule automobile et comprenant une pièce de finition apte à être assemblée entre deux parties de caisse sans élément de fixation rapporté. Plus particulièrement, l'invention propose une pièce de finition sensiblement triangulaire accostant par une première extrémité sur une première partie de caisse, et venant s'appuyer par une face d'accostage à l'intérieur du triangle sur une deuxième partie de caisse. Selon une variante de l'invention, une cinématique avantageuse d'assemblage de la pièce de finition permet en outre, lorsque la face d'accostage est au moins partiellement entourée par des bords montants s'élevant à partir du plan de la face d'accostage, de venir appliquer sans les voiler les bords montants contre des portions correspondantes de la caisse.

A cette fin, il est proposé un ensemble définit par les caractéristiques de la revendication 1.

On notera que dans la description qui suit, la première portion peut être parfois désignée comme la "première portion d'extrémité", du fait de sa position localisée au voisinage de la première extrémité, sans impliquer que la deuxième portion soit également une portion d'extrémité. La pièce peut en outre comporter d'autres portions, par exemple une troisième portion située entre la première portion et la deuxième portion, ou encore une quatrième portion situé latéralement par rapport à la face d'accostage. La pièce de finition peut typiquement être une pièce sensiblement plane, ou être une pièce en forme de coque. Par pièce de finition on entend une pièce non structurelle, c'est-à-dire une pièce ne contribuant pas à la tenue mécanique de la caisse en tant que structure autoporteuse ou structure sollicitée mécaniquement dans son ensemble. La pièce est de préférence configurée de manière à pouvoir être assemblée sur la caisse essentiellement par coopération directe des reliefs d'accrochage avec des rebords et/ou des zones de découpe de la caisse : par coopération directe, on entend une coopération des reliefs avec la tôle de la caisse n'utilisant pas d'élément ou de matériau d'accrochage intermédiaire entre la pièce et la caisse, tels que de la colle ou des pièces d'assemblage tierces.

Selon l'invention, la pièce de finition comprend un troisième relief d'accrochage au niveau de la face d'accostage, le premier, le deuxième et le troisième relief étant conçus pour, lors de l'assemblage de la pièce de finition sur la caisse, être insérés sur des bords/dans des orifices complémentaires de la caisse, respectivement suivant une première, une deuxième et une troisième direction d'insertion perpendiculaires entre elles deux à deux.

Selon l'invention, la première direction est parallèle à une direction longitudinale reliant la première extrémité et la deuxième extrémité.

Selon l'invention, le premier relief comporte une languette formant crochet s'étendant sensiblement parallèlement à la direction longitudinale, à partir d'une base reliée à la première portion de la pièce.

Autrement dit, indépendamment de la géométrie du deuxième et du troisième relief, la pièce comporte au niveau de la première portion d'extrémité, une languette s'étendant sensiblement parallèlement à la direction longitudinale à partir d'une base reliée à la première portion d'extrémité. De manière préférentielle, la languette est configurée de manière à ce que l'on puisse insérer entre la languette, et une portion parallèle à la languette et appartenant à la première portion d'extrémité, une portion de tôle de la caisse s'étendant parallèlement à la direction longitudinale.

Selon l'invention, le deuxième relief peut comporter une deuxième languette formant crochet configurée pour venir s'insérer derrière un bord de l'orifice.

Par languette formant crochet, on entend une languette rattaché à un plan de la pièce par une base, et s'étendant sensiblement parallèlement à ce plan de la pièce, de manière à pouvoir accrocher localement ce plan de la pièce à une portion de tôle ou à une portion de caisse plane également parallèle à ce plan de la pièce. Une telle forme de crochet plan peut être réalisée par exemple dans un moule d'injection à tiroir, la forme plane du crochet étant bien adaptée au procédé d'injection. La forme plane de la première languette permet de guider le mouvement de rotation de la pièce lors de l'insertion de la deuxième languette. La forme plane de la deuxième languette permet un bon maintien plan sur plan de la face d'accrochage sur la potion complémentaire de caisse. La première languette peut être typiquement plus longue entre la base et l'extrémité, que n'est large la base, de manière à faciliter le mouvement de rotation. La deuxième languette peut être typiquement plus courte entre la base et l'extrémité, que n'est large la base, de manière à obtenir un bon maintien plan sur plan pour un mouvement d'insertion d'amplitude réduite.

La deuxième languette est par exemple orientée de manière à pouvoir être insérée derrière le bord de l'orifice, par un mouvement de la pièce imprimant à la languette un déplacement sensiblement perpendiculaire à la direction longitudinale. Un tel mouvement, peut par exemple correspondre à un mouvement de rotation de la pièce dans un plan sensiblement parallèle au plan moyen de la face d'accostage, autour d'un centre de rotation se trouvant au niveau de la première portion de la pièce. Le centre de rotation peut par exemple correspondre à la base de la languette appartenant au premier relief d'accrochage.

Le troisième relief comporte, selon l'invention, au moins une patte de rétention sensiblement perpendiculaire à la face d'accostage et comportant avec une extrémité anti-retour configurée pour un verrouillage de type harpon. La patte de rétention peut être par exemple configurée pour être insérée dans un orifice de la caisse perpendiculairement au plan local de la face d'accostage. Selon un mode de réalisation avantageux, la patte de rétention comprend une zone d'attache plane joignant le harpon à la pièce, le plan de cette zone d'attache comprenant la direction d'insertion de la deuxième languette. Ainsi, lors de l'insertion de la seconde languette, peut-on commencer à positionner le troisième relief par rapport à l'orifice dans lequel il viendra se loger, avec peu de risque de plier la patte de rétention en cas de défaut mineur de centrage de celle-ci par rapport à l'orifice. Avantageusement, la pièce de finition peut comporter deux troisièmes reliefs comportant des pattes planes s'étendant dans des plans parallèles, et comprenant chacun la direction d'insertion de la seconde languette.

La pièce de finition et la caisse qui l'accueille peuvent être configurées de manière à ce que la mise en place de la deuxième languette derrière le bord de l'orifice, puisse être obtenue en faisant pivoter la pièce autour du premier relief de manière à amener le troisième relief en direction du deuxième relief.

La pièce de finition peut être réalisée de manière monobloc par injection de matière(s) thermoplastique(s).

Selon un mode de réalisation avantageux, la pièce peut comporter sur son pourtour une lèvre en matière thermoplastique plus souple que la matière de la face d'accostage. Une telle pièce peut être réalisée par exemple par surmoulage de matière élastomère sur le pourtour d'une pièce en matière plus rigide. Selon une autre variante de réalisation, une telle pièce peut être réalisée par injection sandwich de matière élastomère et de matière plus rigide, de manière à obtenir un coeur de pièce rigide et une peau en matière élastomère, la matière élastomère, donnant également ses caractéristiques locales au contour de la pièce.

Il est également proposé un procédé d'assemblage sur une caisse d'habillage et/ou de protection, définit par les caractéristiques de la revendication 6.

Quelques buts, caractéristiques et avantages de l'invention apparaîtront à la lecture de la description suivante, donnée uniquement à titre d'exemple non limitatif, et faite en références aux figures annexées, sur lesquelles :
la figure 1 est une vue en perspective éclatée d'une pièce de finition selon l'invention au voisinage de deux portions de caisses sur lesquelles sur lesquelles elle peut être assemblée;
la figure 2 est une vue en perspective de la pièce de finition de la figure 1, isolée et vue sous un autre angle.

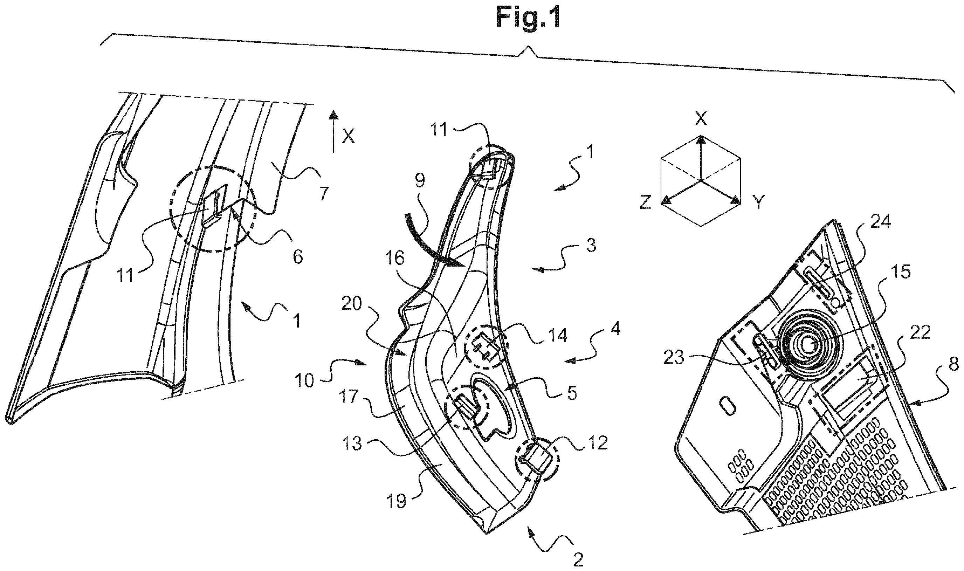

Tel qu'illustré sur la figure 1, une pièce de finition 10 est montée sur une caisse, par exemple sur une caisse de véhicule automobile, entre une première partie de caisse 7 et une deuxième partie de caisse 8. Sur la figure 1 sont représentées une première et une deuxième partie d'une caisse sur laquelle la pièce de finition est prévue pour être montée dans un véhicule. Les première et deuxième parties de caisse sont représentées déportées de leur positon réelle afin de permettre de mieux voir leur géométrie. La première partie de caisse est représentée avec une extrémité de la pièce de finition en cours d'assemblage.

La deuxième partie de caisse 8 est représentée tournée par rapport à sa position d'assemblage avec la pièce 10. En position assemblée, les directions des repères respectifs XYZ représentés pour la pièce 10 et pour la partie de caisse 8 doivent coïncider.

La pièce de finition 10 s'étend suivant une direction longitudinale X, qui peut correspondre, une fois la pièce assemblée, à la direction d'avancement du véhicule. Cette direction longitudinale, qui correspond comme décrit plus loin à une des directions particulières de la pièce lors de l'assemblage de la pièce sur la caisse, pourrait, selon d'autres variantes de réalisation correspondre en position assemblée de la pièce à d'autres directions du véhicule. Dans l'exemple illustré sur la figure 1, la pièce de finition 10 s'étend d'une première extrémité 1 à une deuxième extrémité 2, et comprend une première portion 3 relativement effilée proche de la première extrémité 1, qui s'élargit vers la deuxième extrémité 2, en une face d'accostage 5 sensiblement plane, s'étendant ici dans un plan repéré par les directions X Y. La pièce 10 comprend une deuxième portion 4 s'étendant jusqu'à la deuxième extrémité et comprenant la face d'accostage. Dans l'exemple illustré, la face d'accostage est bordée de bords montants 19 et 20 qui se terminent suivant des directions sensiblement perpendiculaires au plan X Y de la face d'accostage. Les bords montants 19 et 20 permettent ainsi de relier la face d'accostage 5 à des portions de tôle s'étendant dans des plans comprenant une direction Z perpendiculaire à la face d'accostage. La pièce de finition 10 est assemblée par sa première extrémité 1, munie d'un premier relief d'accrochage 11, sur un bord franc 6 de tôle s'étendant dans un plan comprenant lui aussi la direction longitudinale X. Le relief d'accrochage 11 forme ici une languette s'étendant sensiblement suivant l'axe X, à partir d'une base de la languette rattachée à la première portion 3. Lors de l'assemblage de la pièce de finition 10 sur la caisse, la première extrémité 1 de la pièce de finition est accrochée en premier à l'aide de la languette 11. A ce stade de l'assemblage, la pièce de finition 10, qui est accrochée par sa première extrémité 1 effilée, reste relativement mobile en rotation autour de son point d'accrochage sur le bord de tôle 6 de la première partie de caisse 7. Cette mobilité de la pièce de finition 10 permet de venir rapprocher la face d'accostage 5 de la pièce 10, vers un plan de tôle adapté pour recevoir la face d'accostage 5 et situé sur la deuxième partie de caisse 8. La mobilité de la pièce de finition 10 permet de positionner avec un bon degré de liberté de mouvement la deuxième portion 4 de la pièce en vue de l'assemblage de cette deuxième portion sur la deuxième partie de caisse 8, ce qui permet à la fois de faciliter l'opération d'assemblage, et, au besoin, de compenser les écarts dimensionnels concernant l'intervalle séparant la première partie de caisse 7 et la deuxième partie de caisse 8.

Dans l'exemple illustré, la deuxième partie de caisse 8 est traversée par un orifice 15 qui vient se superposer avec un orifice complémentaire 18 de la pièce de finition 10 une fois la pièce de finition assemblée. L'orifice 18 se trouve ici au niveau de la face d'accostage 15. On ne s'éloigne pas du cadre de l'invention si la pièce de finition ne comporte pas d'orifice au niveau de sa face d'accostage.

Outre la première languette 11, la pièce de finition 10 comporte en un deuxième relief d'accrochage sous forme d'une deuxième languette 12 formant crochet et orientée perpendiculairement à la première languette 11. Une fois la face d'accostage 5 au voisinage de la deuxième partie de caisse 8, la deuxième languette 12 est insérée par un mouvement de rotation de la pièce 10, dans un logement 22 de la caisse, réalisé ici sous forme d'un orifice traversant la deuxième partie de caisse 8. On note que la pièce de finition 10 est disposée au-dessus de la deuxième partie de caisse 8. Le mouvement de rotation de la pièce 10 autour de la première extrémité 1 de la pièce, dont le sens de rotation est représenté par la flèche 9, permet d'insérer la deuxième languette 12 dans le logement 22 dédié, suivant une direction Y sensiblement perpendiculaire à la direction longitudinale X d'insertion de la première languette 11. La deuxième languette 12 pointe de préférence vers un bord de la pièce de finition qui est sensiblement coplanaire avec la face d'accostage, autrement dit ce bord ne se termine pas par un bord montant. Ainsi l'insertion de la deuxième languette n'est pas gênée par un frottement "à contresens" d'un bord montant.

La pièce de finition comporte enfin au niveau de sa face d'accostage 5, deux reliefs d'accrochage 13, 14 de type harpon pointant sensiblement perpendiculairement à la face d'accostage et situés du même côté par rapport au plan de la face d'accostage que la deuxième languette 12. Les reliefs de type harpon 13, 14 sont situés, dans le plan de la face d'accostage 5, plus près des bords montants 19 et 20 que la deuxième languette 12 formant crochet.

Dans le sens de l'axe Z perpendiculaire à la face d'accostage, les bords montants 19 et 20 "montent" du côté opposé à la direction vers laquelle pointent les extrémités des harpons 13, 14. De cette manière, lors de l'assemblage de la pièce, après l'assemblage de la première languette 11 et de la deuxième languette 12 décrits précédemment, lorsque les troisième et quatrième reliefs d'accrochage 13, 14 sous forme de harpon sont à leur tour insérés, suivant une direction parallèle à l'axe Z, dans des orifices dédiés 23 et 24 traversant la deuxième partie de caisse, les bords montants peuvent venir se plaquer et frotter contre la partie de caisse qu'ils doivent recouvrir dans le sens dans le sens qui améliore le placage des bords montants, sans les enrouler ni les faire onduler.

On évite ainsi de déformer par flambement ou de froisser les bords montants 19 et 20. Ceux-ci peuvent être par exemple réalisés dans des matériaux souples, suivant des techniques classiques de réalisation de lèvres élastomères entourant une pièce de finition 10 injectée en matière rigide. La pièce de finition 10 peut ainsi comporter une zone centrale 16 rigide et une lèvre périphérique 17 souple comprenant notamment tout ou partie des bords montants 19 et 20.

L'assemblage de la pièce de finition se termine donc par une insertion suivant l'axe Z, des deux harpons 13 et 14 dans des logements 23, 24 de dimensions adaptées à la fois suivant l'axe X et suivant l'axe Y, de manière à bloquer les déplacements suivant les axes X et Y des languettes 11 et 12. La forme des harpons est configurée pour contribuer à plaquer, au niveau des harpons 13, 14, la face d'accostage contre la deuxième partie de caisse, qui est déjà plaquée contre la caisse au niveau de la deuxième languette 12.

Les deuxième, troisième, quatrième reliefs d'accrochage respectivement 12, 13, 14, permettent ainsi de plaquer la face d'accostage 5 et de la maintenir suivant un contact plan sur plan, verrouillé en rotation, contre la deuxième partie de caisse 8, une fois la première extrémité de la pièce verrouillée en translation par le premier relief d'accrochage 11.

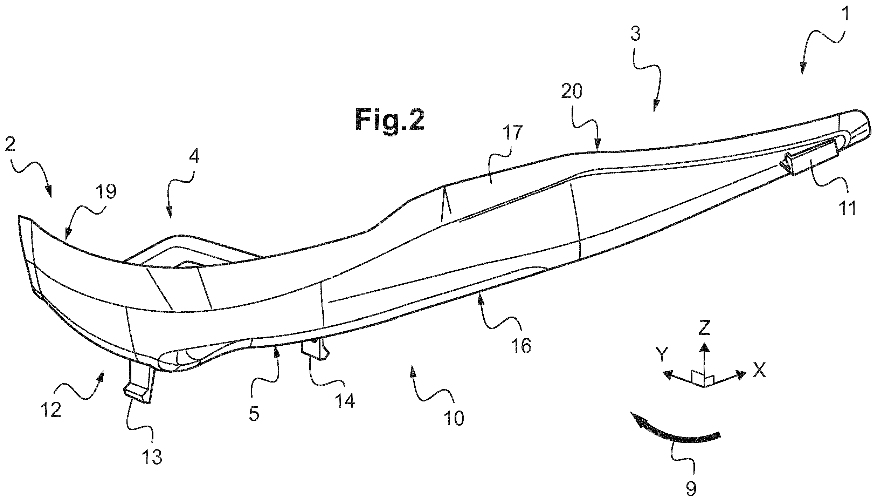

La figure 2 permet de mieux appréhender la forme tridimensionnelle de la pièce, ici comprenant des bords montants 19, 20 à extrémités souples 17 entourant une portion centrale 16 en matériau rigide, la portion centrale portant sur une face des reliefs d'accrochage 11, 12, 13, 14 intégrés à la pièce.

Dans les exemples de réalisation illustrés, la pièce de finition 10 est typiquement une pièce dénommée « obturateur latéral de grille d'auvent » par l'homme de l'art. La grille d'auvent est une grille située à la base du pare-brise s'étendant sensiblement sur toute sa largeur suivant la direction transversale du véhicule. La grille d'auvent recouvre une zone de filtrage air/eau généralement désignée « boite à eau » qui a pour fonction de séparer l'eau ruisselant à la base du pare-brise de l'air qui est à acheminer à un système de ventilation/climatisation situé dans l'habitacle. Comme son nom l'indique, cette pièce de finition 10 « obturateur latéral de grille d'auvent » vient recouvrir une zone latérale d'une grille d'auvent, en réalisant une jonction esthétique avec des éléments adjacents, par exemple le pare-brise, le bord arrière du capot et/ou le bord arrière d'une aile avant du véhicule. Cette pièce de finition 10 améliore l'esthétique en entourant un orifice et l'axe de sortie correspondant d'un balai d'essuie-vitre. La pièce de finition 10 participe également à l'optimisation aérodynamique du véhicule dans une zone fortement impactée par les turbulences aérodynamiques. La pièce de finition 10 obture les creux et masque les irrégularités de formes afin de guider et canaliser l'air de manière optimale. C'est pourquoi elle doit être fixée de manière à limiter les vibrations de la pièce et à assurer une bonne étanchéité sur certains de ses bords. Dans l'exemple décrit, la première extrémité 1 de la pièce de finition 10 est dirigée vers l'arrière du véhicule, tandis que la seconde extrémité 2 de la pièce de finition est dirigée vers l'avant du véhicule.

L'invention ne se limite pas aux exemples de réalisation décrits et peut se décliner en de nombreuses variantes. La pièce de finition peut ne pas être munie de bords montants, ou être munie d'un bord montant ne longeant qu'un seul côté, sensiblement rectiligne de la pièce.

Les rebords 19 et 20 peuvent ne pas se terminer suivant des directions perpendiculaires au plan de la face d'accostage, tout en étant inclinés par rapport à ce plan.

La pièce de finition peut-être une pièce métallique, une pièce injectée en matière plastique, ou une pièce formée par d'autres méthodes connues, par exemple par polymérisation de mats de matériaux composites dans lesquels on intègre des éléments formant les reliefs d'accrochage. Certaines pièces de finition peuvent être plus complexes, par exemple recouvertes de matériaux d'habillage tels que les tissus.

L'une des portions de caisse, par exemple la deuxième portion de caisse, peut être une grille, par exemple une grille d'auvent, le terme tôle s'entendant ici de manière générique, comme une portion de paroi plane, pleine ou ajourée.

Le premier relief et/ou le second relief peuvent être des crochets à section autre que rectangulaire, autrement dit des crochets n'ayant pas une forme de languette plane. Ces crochets peuvent par exemple se terminer par une "languette" non plane de section par exemple ronde, ellipsoïdale, carrée ou autre section plus isotrope qu'un rectangle. Selon un mode de réalisation préféré, une extrémité du crochet est parallèle au plan de tôle auquel le crochet doit être attaché, mais on peut envisager des variantes dans lesquelles, en position assemblée, l'extrémité du crochet n'est pas parallèle à la tôle derrière laquelle le crochet doit se glisser.

Une pièce de finition selon l'invention peut être assemblée sur une caisse sans nécessiter de pièces de fixation supplémentaires. On limite ainsi à la fois le nombre de références de pièces à gérer, les manipulations au moment de l'assemblage, et les aléas de pièces de fixations égarées au moment du montage. Selon une variante de réalisation, la pièce de finition peut présenter des bords montants venant en appui sur des parois de la pièce sensiblement perpendiculaire à la face d'accostage, et la cinématique d'assemblage de la pièce de finition permet de venir plaquer de manière optimale ces bords montants contre les parois correspondantes. Ces bords montants sont dépourvus d'éléments de fixation, ce qui améliore la précision de l'accostage et l'étanchéité du contact entre les bords montant et les portions de caisse sur lesquelles ils s'appuient.

## Revendications

1. Ensemble comprenant une caisse d'un véhicule automobile et comprenant une pièce de finition, la caisse comprenant une première partie de caisse d'habillage et/ou de protection ainsi qu'une deuxième partie de caisse d'habillage et/ou de protection, la pièce de finition (10) étant configurée pour relier la première partie de caisse (7) et la deuxième partie de caisse (8),
*la première partie de caisse (7) étant terminée par un bord de tôle (6),
*la deuxième partie de caisse (8) présentant une portion sensiblement plane en regard du bord de tôle et étant traversée par un orifice (22),
*la pièce de finition comprenant :
- une première extrémité (1) et une deuxième extrémité (2)
- une face d'accostage (5)
- une première portion (3) comprenant la première extrémité (1)
- une deuxième portion (4) comprenant la face d'accostage (5) et s'étendant jusqu'à la deuxième extrémité (2)
- des reliefs d'accrochages (11, 12, 13, 14) intégrés de manière monobloc à la pièce, dont au moins un premier relief (11) en saillie par rapport à la première portion (3), un deuxième relief (12) en saillie par rapport à la face d'accostage (5), et au moins un troisième relief (13,14), le premier, le deuxième et le troisième reliefs étant conçus pour accrocher la pièce (10) au bord (6) de la première partie de la caisse (7) par le premier relief d'accrochage (11), et mettre en appui plan la face d'accostage (5) sur la deuxième partie de caisse (8), en insérant le deuxième relief (12) au travers dudit orifice (22) de la deuxième partie de caisse (8), de manière à ce qu'une fois en en position assemblée, la pièce (10) soit accrochée au bord (6) de la première partie de la caisse (7) par le premier relief d'accrochage (11), et la face d'accostage (5) soit en appui plan sur la deuxième partie de caisse (8),
la pièce de finition (10) étant configurée de manière à pouvoir être assemblée sur la caisse essentiellement par coopération directe de chaque relief d'accrochage (11, 12, 13, 14) avec au moins un bord (6) ou un orifice de la caisse (22, 23, 24),
**caractérisé en ce que** le premier (11), le deuxième (12) et le troisième relief (13) sont conçus pour, lors de l'assemblage de la pièce de finition (10) sur la caisse, être insérés sur des bords (6) ou être insérés dans des orifices de la caisse (22, 23, 24) complémentaires avec les reliefs, respectivement suivant une première (X), une deuxième (Y) et une troisième (Z) direction d'insertion perpendiculaires entre elles deux à deux,
la première direction (X) étant parallèle à une direction longitudinale reliant la première extrémité (1) et la deuxième extrémité (2),
le premier relief (11) comportant une languette formant crochet et s'étendant sensiblement parallèlement à la direction longitudinale (X), à partir d'une base reliée à la première portion (3) de la pièce, le premier relief d'accrochage (11) forme une languette s'étendant en longueur suivant la direction longitudinale (X), à partir de la base de la languette rattachée à la première portion (3), de manière à être plus longue que n'est large la base de la languette, de manière à faciliter au cours du montage de la pièce de finition (10), un mouvement de rotation, dans un plan sensiblement parallèle au plan moyen de la face d'accostage (5), autour d'un centre de rotation se trouvant au niveau de la première portion de la pièce de finition (10), accrochée au bord (6) de la première partie de la caisse (7) par le premier relief d'accrochage (11),
le deuxième relief (12) comportant une deuxième languette formant crochet configurée pour venir s'insérer derrière un bord de l'orifice (22), et le troisième relief (13) comportant au moins une patte de rétention sensiblement perpendiculaire à la face d'accostage (5), le troisième relief étant muni d'une extrémité anti-retour configurée pour un verrouillage de type harpon.

2. Ensemble selon la revendication 1, dans laquelle la deuxième languette (12) est orientée de manière à pouvoir être insérée derrière le bord de l'orifice (22), par un mouvement de rotation de la pièce dans un plan sensiblement parallèle au plan moyen de la face d'accostage, autour d'un centre de rotation se trouvant au niveau de la première portion de la pièce.

3. Ensemble selon la revendication 2, configurée pour que la mise en place de la deuxième languette (12) derrière le bord de l'orifice (22), puisse être obtenue en faisant pivoter la pièce de finition autour du premier relief (11) de manière à amener le troisième relief (13) en direction du deuxième relief (12).

4. Ensemble selon l'une quelconque des revendications précédentes, dans lequel la pièce de finition (10) est réalisée de manière monobloc par injection de matière(s) thermoplastiques.

5. Ensemble selon l'une quelconque des revendications précédentes, dans laquelle la face d'accostage est bordée de bord(s) montant(s) qui se terminent suivant des directions sensiblement perpendiculaires au plan (X Y) de la face d'accostage, et la deuxième languette (12) pointe vers un bord de la pièce qui reste sensiblement coplanaire avec la face d'accostage

6. Procédé d'assemblage sur une caisse d'habillage et/ou de protection notamment sur une caisse de véhicule automobile, d'une pièce de finition (10) avec les caractéristiques définies par la revendication 1, et comportant une portion plane d'accostage (5),
le procédé comprenant une étape d'insertion derrière un bord (6) d'une première partie (7) de tôle de la caisse, parallèlement à une première direction (X) de la pièce d'une languette (11) de la pièce formant crochet, une étape de rotation de la pièce (10) autour d'un point d'attache de la languette sur la pièce, dans un plan (X Y) parallèle à la portion plane d'accostage (5), de manière à insérer un deuxième crochet (12) de la pièce derrière un bord de tôle d'un orifice (22) de la caisse, et une étape de verrouillage de la pièce au cours de laquelle on met en appui la portion d'accostage (5) en la rapprochant, puis en la plaquant sur une partie parallèle de la caisse, et en insérant ce faisant dans au moins une découpe (23, 24) de la partie parallèle de caisse, au moins un relief (13, 14) de type harpon faisant saillie par rapport à la portion d'accostage (5).

## Patentansprüche

1. Anordnung, welche eine Karosserie eines Kraftfahrzeugs umfasst und ein Abschlussteil umfasst, wobei die Karosserie einen ersten Verkleidungs- und/oder Schutzkarosserieteil sowie einen zweiten Verkleidungs- und/oder Schutzkarosserieteil umfasst, wobei das Abschlussteil (10) dafür ausgebildet ist, den ersten Karosserieteil (7) und den zweiten Karosserieteil (8) zu verbinden,
* wobei der erste Karosserieteil (7) in einem Blechrand (6) endet,
* wobei der zweite Karosserieteil (8) einen im Wesentlichen ebenen Abschnitt gegenüber dem Blechrand aufweist und von einer Öffnung (22) durchquert wird,
* wobei das Abschlussteil umfasst:
- ein erstes Ende (1) und ein zweites Ende (2),
- eine Anlegeseite (5),
- einen ersten Abschnitt (3), der das erste Ende (1) umfasst,
- einen zweiten Abschnitt (4), der die Anlegeseite (5) umfasst und sich bis zum zweiten Ende (2) erstreckt,
- Verankerungsreliefs (11, 12, 13, 14), die einstückig an das Teil angeformt sind, darunter wenigstens ein erstes Relief (11), das bezüglich des ersten Abschnitts (3) vorsteht, ein zweites Relief (12), das bezüglich der Anlegeseite (5) vorsteht, und wenigstens ein drittes Relief (13, 14), wobei das erste, das zweite und das dritte Relief dafür ausgelegt sind, das Teil (10) am Rand (6) des ersten Karosserieteils (7) durch das erste Verankerungsrelief (11) zu verankern und die Anlegeseite (5) auf dem zweiten Karosserieteil (8) flächig zur Anlage zu bringen, indem das zweite Relief (12) durch die Öffnung (22) des zweiten Karosserieteils (8) hindurch eingesetzt wird, derart, dass das Teil (10), wenn es sich in der montierten Position befindet, am Rand (6) des ersten Karosserieteils (7) durch das erste Verankerungsrelief (11) verankert ist und die Anlegeseite (5) am zweiten Karosserieteil (8) flächig anliegt,
wobei das Abschlussteil (10) derart ausgebildet ist, dass es im Wesentlichen durch direktes Zusammenwirken jedes Verankerungsreliefs (11, 12, 13, 14) mit wenigstens einem Rand (6) oder einer Öffnung der Karosserie (22, 23, 24) an der Karosserie montiert werden kann,
**dadurch gekennzeichnet, dass** das erste (11), das zweite (12) und das dritte Relief (13) dafür ausgelegt sind, bei der Montage des Abschlussteils (10) an der Karosserie in einer ersten (X), einer zweiten (Y) bzw. einer dritten (Z) Einsetzrichtung, die paarweise orthogonal zueinander sind, an Rändern (6) eingesetzt zu werden oder in Öffnungen der Karosserie (22, 23, 24) eingesetzt zu werden, die zu den Reliefs komplementär sind,
wobei die erste Richtung (X) parallel zu einer Längsrichtung ist, die das erste Ende (1) und das zweite Ende (2) verbindet,
wobei das erste Relief (11) eine Lasche aufweist, die hakenförmig ist und sich im Wesentlichen parallel zur Längsrichtung (X) von einer Basis aus erstreckt, die mit dem ersten Abschnitt (3) des Teils verbunden ist, wobei das erste Verankerungsrelief (11) eine Lasche bildet, die sich längs entlang der Längsrichtung (X) von der am ersten Abschnitt (3) befestigten Basis der Lasche aus derart erstreckt, dass sie länger ist, als die Basis der Lasche breit ist, um so während der Montage des Abschlussteils (10) eine Drehbewegung in einer im Wesentlichen zur Mittelebene der Anlegeseite (5) parallelen Ebene um einen Drehpunkt zu erleichtern, der sich am ersten Abschnitt des Abschlussteils (10) befindet, das durch das erste Verankerungsrelief (11) am Rand (6) des ersten Karosserieteils (7) verankert ist,
wobei das zweite Relief (12) eine zweite hakenförmige Lasche aufweist, die dafür ausgebildet ist, hinter einen Rand der Öffnung (22) eingesetzt zu werden, und wobei das dritte Relief (13) wenigstens eine Haltelasche aufweist, die im Wesentlichen zu der Anlegeseite (5) senkrecht ist, wobei das dritte Relief mit einem gegen Zurückbewegung gesicherten Ende ausgestattet ist, das für eine Verriegelung vom Widerhakentyp ausgebildet ist.

2. Anordnung nach Anspruch 1, wobei die zweite Lasche (12) derart ausgerichtet ist, dass sie durch eine Drehbewegung des Teils in einer im Wesentlichen zur Mittelebene der Anlegeseite parallelen Ebene um einen Drehpunkt, der sich am ersten Abschnitt des Teils befindet, hinter den Rand der Öffnung (22) eingesetzt werden kann.

3. Anordnung nach Anspruch 2, welche dafür ausgebildet ist, dass die Anbringung der zweiten Lasche (12) hinter dem Rand der Öffnung (22) erreicht werden kann, indem ein Schwenken des Abschlussteils um das erste Relief (11) bewirkt wird, derart, dass das dritte Relief (13) in Richtung des zweiten Reliefs (12) bewirkt wird.

4. Anordnung nach einem der vorhergehenden Ansprüche, wobei das Abschlussteil (10) durch Spritzgießen von thermoplastischem Material (thermoplastischen Materialien) aus einem Stück hergestellt ist.

5. Anordnung nach einem der vorhergehenden Ansprüche, wobei die Anlegeseite von einem aufragenden Rand (aufragenden Rändern) umrandet wird, welche in Richtungen enden, die im Wesentlichen senkrecht zur Ebene (X Y) der Anlageseite sind, und die zweite Lasche (12) zu einem Rand des Teils zeigt, welcher im Wesentlichen koplanar mit der Anlegeseite bleibt.

6. Verfahren zur Montage eines Abschlussteils (10) mit den durch Anspruch 1 definierten Merkmalen, das einen ebenen Anlegeabschnitt (5) aufweist, an einem Verkleidungs- und/oder Schutzkasten, insbesondere an einer Kraftfahrzeugkarosserie,
wobei das Verfahren einen Schritt des Einsetzens einer hakenförmigen Lasche (11) des Teils hinter einen Rand (6) eines ersten Blechteils (7) der Karosserie parallel zu einer ersten Richtung (X) des Teils umfasst, einen Schritt der Drehung des Teils (10) um einen Befestigungspunkt der Lasche am Teil in einer zu dem ebenen Anlegeabschnitt (5) parallelen Ebene (X Y), um so einen zweiten Haken (12) des Teils hinter einen Blechrand einer Öffnung (22) der Karosserie einzusetzen, und einen Schritt der Verriegelung des Teils, in welchem der Anlegeabschnitt (5) zur Anlage gebracht wird, indem er an einen parallelen Teil der Karosserie angenähert und dann an diesen angedrückt wird und indem dabei wenigstens ein Relief (13, 14) vom Widerhakentyp, das bezüglich des Anlegeabschnitts (5) vorsteht, in wenigstens einen Ausschnitt (23, 24) des parallelen Karosserieteils eingesetzt wird.

## Claims

1. Assembly including a body of a motor vehicle and including a finishing part, the body having a first trim and/or protective body portion and a second trim and/or protective body portion, the finishing part (10) being designed to link the first body portion (7) and the second body portion (8),
* the first body portion (7) ending in a sheet edge (6),
* the second body portion (8) having a substantially flat portion facing the sheet edge and being traversed by an orifice (22),
* the finishing part having:
- a first end (1) and a second end (2),
- a docking face (5),
- a first portion (3) including the first end (1),
- a second portion (4) including the docking face (5) and extending as far as the second end (2),
- engagement reliefs (11, 12, 13, 14) integral with the part, including at least a first relief (11) projecting from the first portion (3), a second relief (12) projecting from the docking face (5) and at least one third relief (13, 14), the first, second and third reliefs being designed to engage the part (10) with the edge (6) of the first body portion (7) using the first engagement relief (11) and to press the docking face (5) flat against the second body portion (8) by inserting the second relief (12) through said orifice (22) in the second body portion (8) such that, once in the assembled position, the part (10) is engaged with the edge (6) of the first body portion (7) by the first engagement relief (11) and the docking face (5) bears flat against the second body portion (8),
since the finishing part (10) is designed to be assembled on the body essentially by direct cooperation of each engagement relief (11, 12, 13, 14) with at least one edge (6) or an orifice (22, 23, 24) in the body,
**characterized in that** the first relief (11), the second relief (12) and the third relief (13) are designed to be placed, when the finishing part (10) is assembled on the body, on the edges (6) or in the orifices (22, 23, 24) in the body that match said reliefs, respectively in a first insertion direction (X), a second insertion direction (Y) and a third insertion direction (Z) that are perpendicular to one another in pairs,
the first direction (X) being parallel to a longitudinal direction linking the first end (1) and the second end (2),
the first relief (11) being a hook-shaped tab extending substantially parallel to the longitudinal direction (X) from a base linked to the first portion (3) of the part, the first engagement relief (11) forms a tab extending lengthwise in the longitudinal direction (X) from the base of the tab attached to the first portion (3) such that the base of the tab is longer than it is wide, such as to facilitate, during assembly of the finishing part (10), a rotational movement in a plane substantially parallel to the mid plane of the docking face (5) about a centre of rotation in the first portion of the finishing part (10), engaged with the edge (6) of the first body portion (7) by the first engagement relief (11),
the second relief (12) being a second hook-shaped tab designed to be inserted behind one edge of the orifice (22), and the third relief (13) being at least one retaining lug substantially perpendicular to the docking face (5), the third relief having a non-return end designed to provide a harpoon lock.

2. Assembly according to Claim 1, in which the second tab (12) is oriented such as to be insertable behind the edge of the orifice (22) by rotating the part in a plane substantially parallel to the mid plane of the docking face about a centre of rotation in the first portion of the part.

3. Assembly according to Claim 2, designed such that the second tab (12) can be positioned behind the edge of the orifice (22) by pivoting the finishing part about the first relief (11) such as to move the third relief (13) towards the second relief (12).

4. Assembly according to any one of the preceding claims, in which the finishing part (10) is made as a single part by injection of thermoplastic material(s).

5. Assembly according to any one of the preceding claims, in which the docking face has upturned edges that end in directions substantially perpendicular to the plane (X, Y) of the docking face, and the second tab (12) points towards an edge of the part that is substantially coplanar with the docking face.

6. Method for assembling a finishing part (10) on a trim and/or protective body notably on a motor vehicle body having the features defined in Claim 1 and including a flat docking portion (5),
the method including a step for inserting a first body sheet portion (7) behind an edge (6) parallel to a first direction (X) of the part of a tab (11) of the hook-shaped part, a step for rotating the part (10) about an attachment point of the tab on the part, in a plane (X, Y) parallel to the flat docking portion (5) such as to insert a second hook (12) of the part behind a sheet edge of an orifice (22) of the body, and a step for locking the part during which the docking portion (5) is brought towards and pressed against a parallel portion of the body, thereby inserting at least one harpoon relief (13, 14) projecting from the docking portion (5) into at least one cut-out (23, 24) of the parallel body portion.
